Europäisches Patentamt

European Patent Office

Office européen des brevets

(19)

(11) Veröffentlichungsnummer: **0 100 427**
**B1**

(12) **EUROPÄISCHE PATENTSCHRIFT**

(45) Veröffentlichungstag der Patentschrift:
04.06.86

(51) Int. Cl.⁴: **F 26 B 15/20**, B 65 G 65/00

(21) Anmeldenummer: 83106178.3

(22) Anmeldetag: 24.06.83

(54) Transportvorrichtung für Massenartikel, insbesondere Emballagedeckel oder Verschlüsse.

(30) Priorität: 29.07.82 DE 3228293

(43) Veröffentlichungstag der Anmeldung:
15.02.84 Patentblatt 84/7

(45) Bekanntmachung des Hinweises auf die Patenterteilung:
04.06.86 Patentblatt 86/23

(84) Benannte Vertragsstaaten:
AT BE CH DE FR GB IT LI LU NL SE

(56) Entgegenhaltungen:
DE - A - 2 928 158
GB - A - 1 082 676
US - A - 1 736 866
US - A - 1 799 135
US - A - 4 132 012

(73) Patentinhaber: Verwaltungsgesellschaft Heinrich Neitz GmbH & Co. KG, Bielefelder Strasse 326,
D-4930 Detmold (DE)

(72) Erfinder: Schnieder, Rolf, Schierholzstrasse 6,
D-4972 Löhne (DE)

(74) Vertreter: Hanewinkel, Lorenz, Dipl.-Phys. et al,
Patentanwälte Dr.Ing. Heinz Nickels Dipl.-Phys. Lorenz Hanewinkel Detmolder Strasse 26,
D-4800 Bielefeld 1 (DE)

ACTORUM AG

## Beschreibung

Die Erfindung bezieht sich auf eine Transportvorrichtung für Massenartikel, wie Emballagendeckel oder Verschlüsse, welche in einem Trockenofen angeordnet ist und welche die mit Beschichtungen, wie Dichtmassen, versehenen Massenartikel unter Wärmeeinwirkung zum Trocknen und/oder Gelieren der Beschichtungen auf vertikalen Förderstrecken auf- und abtransportiert, mit zwei im parallelen Abstand nebeneinander angeordneten, über Umlenkräder endlos umlaufenden Förderketten, an deren einander zugewendeten Kettenseiten eine Vielzahl an Aufnahmetaschen befestigt sind, die zur Aufnahme je eines Randbereiches der Massenartikel zwischen den beiden Förderketten dienen, mit auf jeder Förderstrecke zwei zwischen den Förderketten angeordneten, über die gesamte Höhe der Förderstrecke verlaufenden, senkrechten Führungen für die mit ihrem quer zu den Aufnahmetaschen liegenden Umfangsrand daran geführt anliegenden Massenartikel, mit einer im unteren Umlenkbereich der Förderketten angeordneten Zuführeinrichtung für das Einbringen der Massenartikel in die aufwärtsgehenden Aufnahmetaschen sowie mit einer Austrageeinrichtung für das Herausbewegen der Massenartikel aus den abwärtsgehenden Aufnahmetaschen und mit einer im oberen Umlenkbereich der Förderketten vorgesehenen Übergabeführung, mit der die Massenartikel von einer aufwärtsgehenden Förderstrecke in eine abwärtsgehende Förderstrecke übergeführt werden.

Bei einer derartigen, aus der DE-A-29 28 158 bekannt gewordenen Transportvorrichtung werden die Deckel in bzw. auf Aufnahmetaschen der Förderketten direkt oder mittels Paletten gehalten und auf- und abbewegt. Im oberen Übergabebereich von der aufwärtsgehenden zur abwärtsgehenden Förderstrecke ist eine Übergabeeinrichtung angeordnet, mit der die Deckel bzw. die Paletten mit Deckel, in waagrechter Ebene quer zur bisherigen Förderrichtung verschoben werden. Für diese Verschiebebewegung sind aufwendige Übergabeketten mit Mitnehmern und zusätzlichen Führungen oder Schieber erforderlich. Die Höhenförderung und seitliche Übergabe der Deckel bzw. Paletten mit Deckel erfolgt taktweise, so dass einerseits durch das Anhalten und Weiterfahren eine unruhige Bewegung, wie Verschiebung der Deckel, entsteht, was zu Beschädigungen an den Deckeln und deren Beschichtungen führt, und andererseits die Arbeitsweise dieser Transportvorrichtung verhältnismässig langsam macht.

Da diese bekannte Transportvorrichtung taktweise arbeitet, werden die Transportbewegungen der Deckel ständig unterbrochen, was keine ruhige Transportbewegung gewährleistet.

Ausgehend von der Transportvorrichtung für Massenartikel nach der DE-A-29 28 158 liegt der Erfindung die Aufgabe zugrunde, eine Transportvorrichtung zu schaffen, mit der die Massenartikel auch im Übergabebereich von der aufwärtsgehenden zur abwärtsgehenden Förderstrecke in ruhender Lage sicher, rationell und beschädigungsfrei durch einfache und dauerhaft haltbare Mittel transportiert werden können.

Diese Aufgabe wird erfindungsgemäss dadurch gelöst, dass die Übergabeführung von einer sich um die Welle der oberen Umlenkräder kreisbogenförmig erstreckenden Stützfläche gebildet ist, auf der sich die auf einem kreisbogenförmigen Umlauf von einer aufwärtsgehenden Förderstrecke zu einer abwärtsgehenden Förderstrecke unter 180°-Wendung unterbrechungsfrei bewegenden Massenartikel mit ihrem quer zu den Aufnahmetaschen liegenden Umfangsrand geführt abstützen.

Vorteilhafte Weiterbildungen dieser Aufgabenlösung sind aus den Unteransprüchen zu entnehmen.

Durch die erfindungsgemässe Transportvorrichtung werden die Massenartikel waagrecht liegend in den Aufnahmetaschen gehalten und in dieser Lage nach oben gefördert, dann im Übergangsbereich von der aufwärtsgehenden zur abwärtsgehenden Förderstrecke allmählich um 180° gewendet und anschliessend wieder in waagrechter Ebene liegend nach unten bewegt. Während des Wendevorganges halten die Aufnahmetaschen die Massenartikel einerseits und zum anderen stützen sich die Massenartikel mit einem Randbereich auf der kreisbogenförmigen Stützfläche ab, so dass keinerlei Bewegung innerhalb der Massenartikel erfolgt, sondern diese unter Beibehaltung ihrer ruhenden Lage allmählich um 180° gewendet werden.

Die Massenartikel werden mit der Transportvorrichtung ohne Bewegungsunterbrechungen transportiert, indem die Massenartikel nämlich kontinuierlich aufgenommen und abgegeben und insbesondere im oberen bzw. unteren Umlenkbereich kontinuierlich von der geradlinigen Höhenbewegung in eine kreisbogenförmige Übergabebewegung und anschliessend ebenfalls unterbrechungslos wieder in die geradlinige Abwärtsbewegung übergehen.

Für diese Übergabedurchführung sind einfache Stützscheiben oder Stützplatten oder Transportbänder eingesetzt, die den Massenartikeln in kleinen Stützpunkten eine sichere Auflage geben.

Durch den ruhenden Transport der Massenartikel entfällt einerseits der mechanische Verschleiss an den Förder- und Führungsmitteln und andererseits können auch lackierte oder aus kratzempfindlichem Material bestehende Massenartikel beschädigungsfrei und somit ausschussfrei transportiert werden, so dass ein Abrieb an den Massenartikeln ausgeschlossen wird.

Es lassen sich mit der Transportvorrichtung und deren besonderen Aufnahme- und Führungsmittel die verschiedensten Deckelgrundformen und die verschiedensten Deckelarten, wie angekippte nicht angerollte Deckel, Deckel mit Stanzgrat nach aussen, Flachborddeckel, Vierkantdeckel, Spitzovaldeckel und dgl. transportieren.

Anhand der Zeichnungen werden nachfolgend Ausführungsbeispiele gemäss der Erfindung näher erläutert. Es zeigt:

Fig. 1 eine schematische Seitenansicht einer Deckeltransportvorrichtung mit endlos umlaufender, Aufnahmetaschen für die zu fördernden Deckel aufweisender, senkrechter Förderkette mit im unteren Umlenkbereich vorgesehener Deckelzuführ- und Austrageeinrichtung und im oberen Umlenkbereich vorgesehener Drehführung für die Deckelübergabe von der aufwärtsgehenden zur abwärtsverlaufenden Förderstrecke;

Fig. 2 eine schematische Seitenansicht der Deckeltransportvorrichtung in erweiterter Ausführung mit mehreren Umlenkbereichen und oberen Drehführungen und unterer Gleitführung bei zwei aufwärtsgehenden und zwei abwärtsgehenden Förderstrecken;

Fig. 3 eine schematische Seitenansicht der Deckeltransportvorrichtung in nochmals erweiterter Ausführung mit drei aufwärtsgehenden und drei abwärtsgehenden Förderstrecken;

Fig. 4 eine Vorderansicht im Halbschnitt mit an zwei parallellaufenden Förderketten einander zugewandt angeordneten Aufnahmetaschen für die Deckel;

Fig. 5 eine Draufsicht auf zwei Aufnahmetaschen und diesen zugeordneten senkrechten Führungen sowie einen zu transportierenden Deckel mit kreisförmiger bzw. eckiger Grundform in strichpunktierten Linien, gemäss Schnittlinie V–V in Fig. 2;

Fig. 6 bis 9 eine Stirn- und Seitenansicht einer Aufnahmetasche bzw. eines Taschen-Rastverbinders;

Fig. 10 einen senkrechten Schnitt durch eine obenseitige Drehführung für die Deckel gemäss Schnittlinie II–II in Fig. 2;

Fig. 11 einen Querschnitt durch die obenseitige Drehführung für die Deckel gemäss Schnittlinie III–III in Fig. 2;

Fig. 12 einen Querschnitt mit V-förmig angeordneten Aufnahmetaschen.

Eine Transportvorrichtung für Massenartikel, insbesondere mit Dichtmassen versehene Emballagedeckel 10 und Verschlüsse, ist in einem nicht dargestellten Ofen, vorzugsweise Turmofen, angeordnet und bildet einen Teil dieses Ofens, in dem die Deckel 10 oder Verschlüsse während ihres Transportweges unter Wärmeeinwirkung stehen, so dass dadurch die Dichtmassen geliert und getrocknet (ausgehärtet) werden.

Diese Transportvorrichtung weist zwei im parallelen Abstand nebeneinander verlaufende, senkrechte und endlos umlaufende Förderketten 11 auf, die paternosterartig umlaufen und mindestens eine aufwärtsgehende und mindestens eine abwärtsgehende Förderstrecke 12, 13 bilden, so dass die Deckel 10 auf diesen vertikalen Förderstrecken 12, 13 auf- und abtransportiert werden.

Die beiden parallellaufenden Förderketten 11 haben jeweils eine Vielzahl Aufnahmetaschen 14, die an den einander zugewendeten Kettenseiten angeordnet sind und aufeinander zugerichtet und zueinander hin geöffnete Aufnahmenuten 15 für die Deckel 10 bilden, so dass die Deckel 10 im Abstand zueinander (übereinander) angeordnet in diesen Aufnahmetaschen 14 liegend transportiert werden.

Die Förderketten 11 haben in ihrem unteren Umlenkbereich eine Zuführ- und eine Austrageeinrichtung 16, 17 für die Deckel 10 und in ihrem oberen Umlenkbereich eine Übergabeführung 18, mit der die Deckel 10 von der aufwärts- zur abwärtsgehenden Förderstrecke 12, 13 bewegt werden.

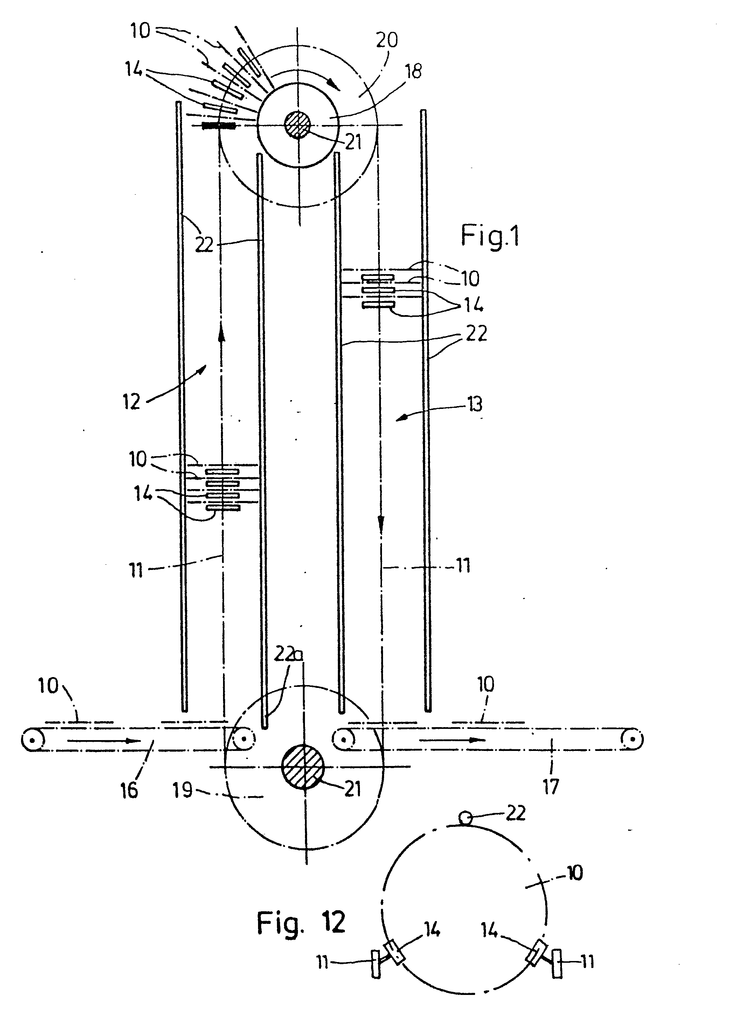

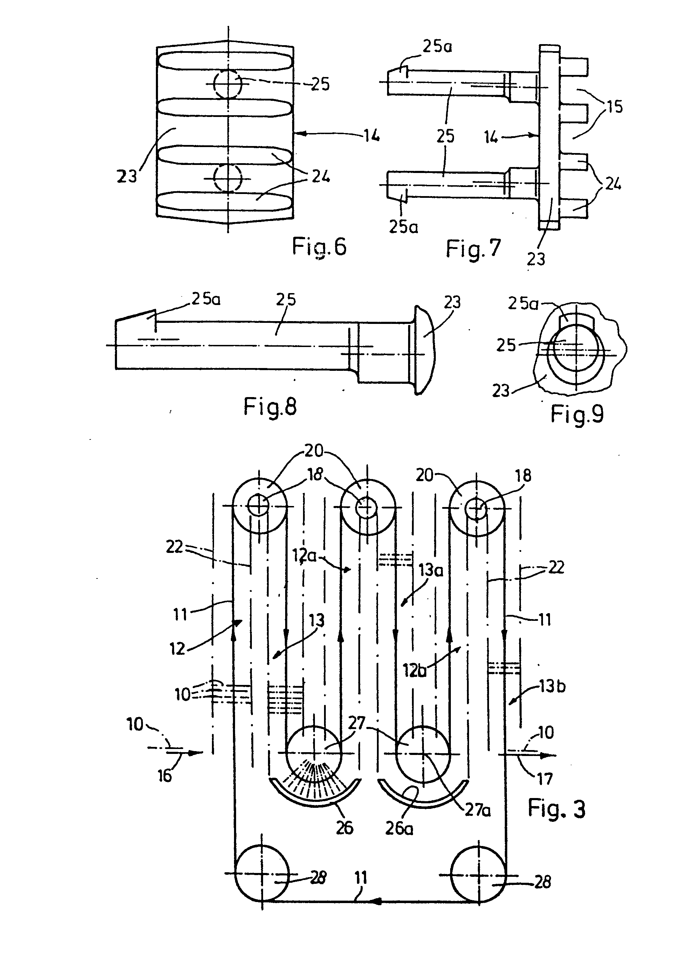

Zunächst wird auf die Grundausführung der Transportvorrichtung nach den Fig. 1 und 4 bis 11 Bezug genommen.

Hierbei laufen die beiden parallelen Förderketten 11 unten- und obenseitig jeweils um ein Kettenrad 19, 20 endlos um, und es ergeben sich zwischen diesen beiden im Abstand übereinander angeordneten Kettenrädern 19, 20 die beiden senkrechten und ebenfalls parallellaufenden Förderstrecken 12, 13. Die beiden unteren und die beiden oberen Kettenräder 19, 20 sind auf je einer Welle 21 drehbar gelagert und im Abstand zueinander in Wellenlängsrichtung festgelegt, wobei dieser Abstand in Verbindung mit den Aufnahmetaschen 14 der grössten Grundformausdehnung der zu fördernden Deckel 10 entspricht. Es liegt im Rahmen der Erfindung, die Kettenräder 19, 20 in Wellenlängsrichtung im Abstand zueinander stufenlos verstellbar vorzusehen, um unterschiedlich grosse Grundformen an Deckeln 10 transportieren (zwischen den Aufnahmetaschen 14 aufnehmen) zu können. Eine der beiden Wellen 21 steht mit einem nicht dargestellten Antrieb in Verbindung.

Im unteren Umlenkbereich ist der aufwärtsgehenden Förderstrecke 12 die vorzugsweise von einem motorisch angetriebenen und endlos umlaufenden Transportband oder -kette gebildete Deckel-Zuführeinrichtung 16 zugeordnet, die zwischen die beiden Kettenräder 19 zum Übergeben der in waagrechter Ebene in Pfeilrichtung zugeführten Deckel 10 in die Aufnahmetaschen 14 geführt ist.

Etwa in waagrechter Verlängerung der Zuführeinrichtung 16 erstreckt sich von der abwärtsgehenden Förderstrecke 13 aus nach aussen die Austrageeinrichtung 17, die vorzugsweise ebenfalls von einem motorisch angetriebenen, endlos umlaufenden Transportband oder -kette gebildet ist und welche die Deckel 10 aus den Aufnahmetaschen 14 übernimmt und aus der Transportvorrichtung in waagrechter Ebene abfördert. Auch diese Austragevorrichtung 17 ist zwischen die Kettenräder 19 geführt. Beide Einrichtungen 16, 17 ragen so weit in die jeweilige Förderstrecke 12, 13 hinein, dass ein sicheres Übergeben und Übernehmen der Deckel 10 in die bzw. von den Aufnahmetaschen 14 gewährleistet wird.

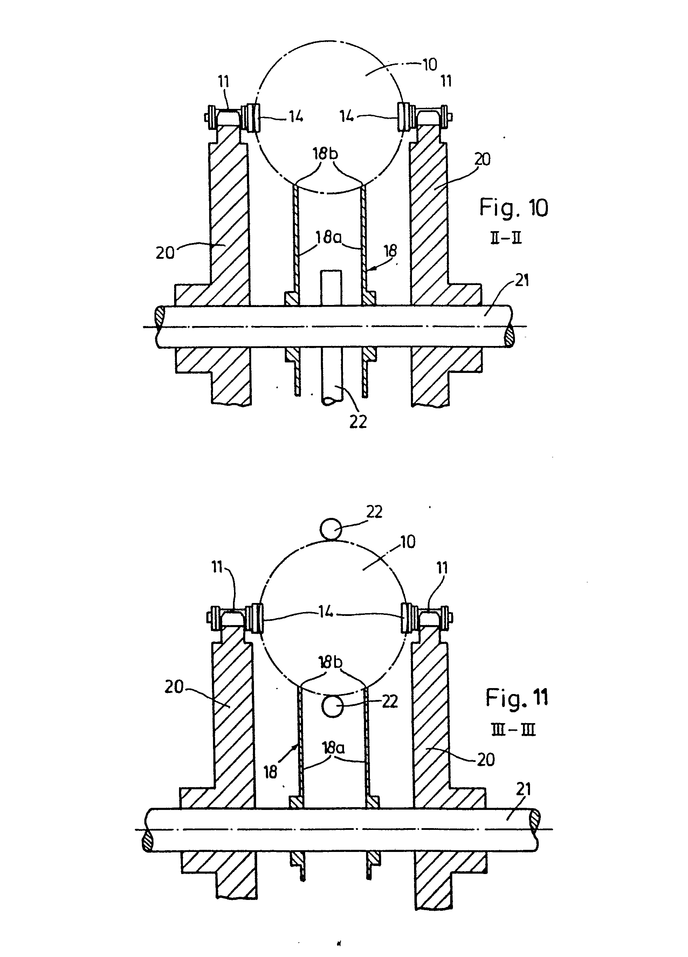

Die im oberen Umlenkbereich angeordnete Übergabeführung 18 ist von einer Drehführung gebildet, welche von mindestens einer, vorzugsweise von zwei, im Abstand zueinander auf der Welle 21 angeordneten und mit den Kettenrädern 20 synchron verdrehbaren Stützscheiben 18a (vgl. Fig. 10 und 11) gebildet ist. Auf diesen beiden Stützscheiben 18a stützen sich die Deckel 10 bei ihrem bogenförmigen Umlauf von der aufwärtsgehenden in die abwärtsgehende Förderstrecke 12, 13 mit ihrem Rand an den Stützflächen 18b ab, wobei dabei die Stützscheiben 18a im Abstand zueinander in Längsrichtung der Umlenkräder-Welle 21 und in ihrem Durchmesser derart auf die Deckelgrösse und in Beziehung zu den Aufnahmetaschen 14 angeordnet sind, dass die Deckel 10 während des bogenförmigen Umlaufes, bei dem eine Deckelwendung um 180° erfolgt, nicht in den Aufnahmetaschen 14 in Deckelebene verschoben werden, sondern ihre ruhende Lage beibehalten. Bei diesem bogenförmigen Umlauf gelangt die bisher beim Aufwärtsbewegen obenliegende Deckelseite nach unten, so dass sie beim Abwärtsbewegen unten liegt.

Zwischen den beiden parallelen Förderketten 11 sind jeder Förderstrecke 12, 13 zwei senkrechte Führungen 22, vorzugsweise Führungsstangen, die vorzugsweise einen kreisförmigen Querschnitt haben, angeordnet, welche sich von dem unteren bis zum oberen Umlenkbereich erstrecken und welche mit den Aufnahmetaschen 14 eine Vierpunktführung der Deckel 10 auf deren Umfang gesehen ergeben.

Die beiden Aufnahmetaschen 14 liegen sich gegenüber, so dass durch die 90°-Anordnung zueinander eine umfangsmässige Vierpunktführung für die Deckel 10 erreicht wird. Insbesondere im oberen Umlenkbereich sind die Führungen 22 so weit bis zur Drehführung 18 vorgesehen, dass ein störungsfreier Führungsübergang aus dem senkrechten Führungsbereich 12 in den bogenförmigen Führungsbereich 18 und aus diesem heraus wieder in den senkrechten Führungsbereich 19 gewährleistet wird.

Im Bereich der Deckelzuführeinrichtung 16 sind die Führungsstangen 22 so weit nach unten heruntergeführt, dass die aussenliegende Führungsstange 22 ein Hineinbewegen der einzelnen Deckel 10 in den Förderbereich 12 ermöglicht und die innenliegende Führungsstange 22 einen Anschlag 22a für den Einführweg in die Förderstrecke 12 bilden kann.

Die Führungsstangen 22 im Bereich der Austrageeinrichtung 17 sind bis nahe auf die Austrageeinrichtung 17 heruntergezogen und dabei ermöglicht auch die aussenliegende Führungsstange 22 ein störungsfreies Herausziehen der einzelnen Deckel 10 aus den Taschen 14 und ein Abfördern durch die Austrageeinrichtung 19.

Der höhenmässige Verlauf der Führungsstangen 22 und deren Anordnung zur Vierpunktführung mit den Aufnahmetaschen 14 zwischen den beiden Förderketten 11 ist aus den Fig. 1, 5 und 11 deutlich sichtbar.

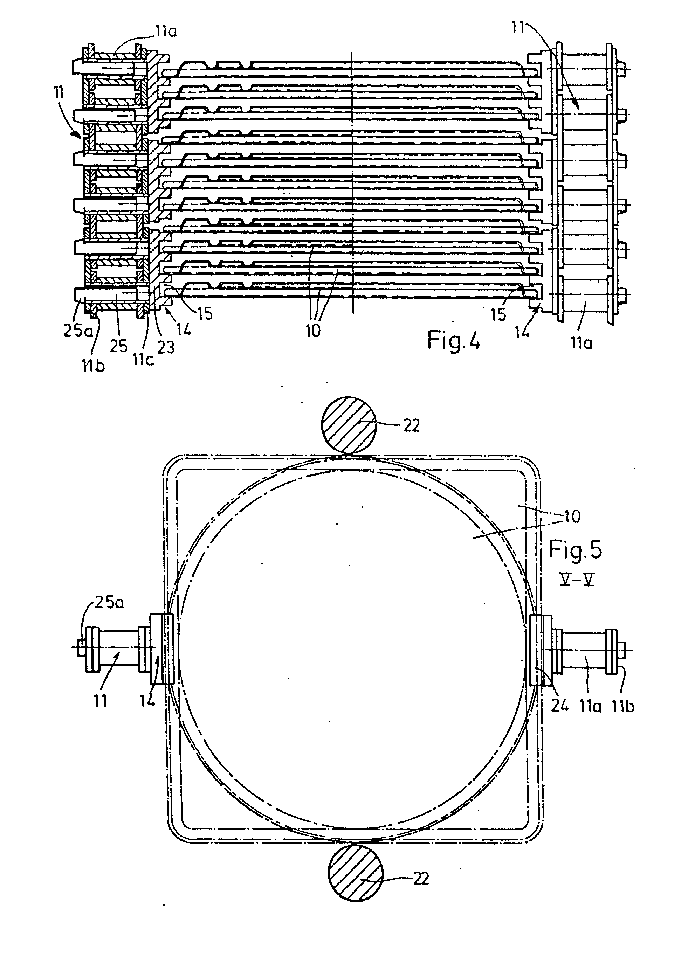

Jede Aufnahmetasche 14 bildet in bevorzugter Weise mehrere im Abstand übereinander angeordnete gleich grosse Aufnahmenuten 15 (vgl. Fig. 4, 6 und 7). Dabei besitzt jede Aufnahmetasche 14 an einer senkrechten Platte 23 an einer Plattenseite mehrere im Abstand übereinander verlaufende waagrechte Auflagerstege 24 mit rechteckiger, sich mit der grösseren Rechteckausdehnung in Deckelebene erstreckender Querschnittform. Benachbarte Auflagerstege 24 einer Aufnahmetasche 14 und benachbarte Auflagerstege 24 der darüber bzw. darunter angeordneten weiteren Aufnahmetasche 14 bilden jeweils eine Aufnahmenut 15 für einen Deckel 10, wobei über die gesamte Förderkettenlänge Aufnahmenuten 15 mit gleicher Grösse und gleichem Abstand zueinander gebildet sind.

An der anderen den Nuten 15 gegenüberliegenden Seite der Platte 23 steht mindestens ein, stehen vorzugsweise zwei, im Abstand übereinander verlaufende, waagrechte Rastverbinder 25 in Bolzenform ab, mit denen jede Platte 23 in den Hohlbolzen 11a der Förderketten 11 befestigt ist. Diese bolzenförmigen Rastverbinder 25 haben an ihrem freien Ende jeweils eine Rastnase 25a, mit der sie beim Durchstecken durch die Hohlbolzen 11a der Förderketten 11 hinter die Kettenglieder 11b fassen und somit die Taschen 14 sicher mit den Ketten 11 verbinden. Im befestigten Zustand der Aufnahmetaschen 14 liegen die Platten 23 an den anderen Kettengliedern 11c der Förderketten 11 an und ihre Auflagerstege 24 zeigen zum aufzunehmenden Deckel 10 hin.

Die Aufnahmetaschen 14 sind jeweils als einteilige Werkstücke, vorzugsweise aus Kunststoff, Metall od. dgl. hergestellt.

Aus Fig. 5 der Zeichnung ist die Lage eines Deckels 10 mit kurzflächigen Randbereichen zwischen zwei Aufnahmenuten 15 zweier sich gegenüberliegender Taschen 14 und der linienförmigen (punktförmigen) Anlage des Deckelmantelrandes an den beiden sich gegenüberliegenden stangenförmigen Führungen 22 ersichtlich, wobei in dieser Vierpunktführung sowohl ein runder als auch ein eckiger Deckel 10 sicher für den Transport geführt werden kann.

Die vorbeschriebene Transportvorrichtung arbeitet wie folgt:

Die beiden Förderketten 11 werden von einer Antriebswelle 21 aus synchron angetrieben und laufen mit einer bestimmten Geschwindigkeit um. Die Zuführgeschwindigkeit der Deckel-Zuführeinrichtung 16, und die Abführgeschwindigkeit der Austrageeinrichtung 17 ist auf die Geschwindigkeit der Förderketten 11 abgestimmt, so dass ein kontinuierlicher Ein- und Auslauf der Deckel 10 gewährleistet wird. Die Zuführeinrichtung 16 bringt die Deckel 10 einzeln in Pfeilrichtung in die aufwärtsgehende Förderstrecke 12 ein und dort übernimmt jeweils eine Aufnahmenut 15 einen Deckel 10, und die Deckel 10 werden dann kontinuierlich laufend zwischen den Taschen gehalten und den Führungen 22 geführt in ruhender, sich nicht verdrehender Lage, aufwärtstransportiert.

Haben die Deckel 10 die aufwärtsgehende, vertikale Förderstrecke 12 durchlaufen, dann erfolgt der bogenförmige Übergang zu der abwärtsgehenden Förderstrecke 13, indem die Deckel 10 ihre ruhende Lage in den Taschen 14 beibehalten, aus den senkrechten Führungen 22 herausgelangen und sich dann mit einer Randkante auf den sich mit den Kettenrädern 20 synchron verdrehenden Drehführung 18 (Stützflächen 18b der Stützscheiben 18a bzw. -räder) abstützen, so dass sie im bogenförmigen Übergangsbereich eine Dreipunktführung haben, und zwar zwischen den beiden Taschen 14 und der Drehführung 18. Obwohl die Drehführung 18 durch ihre beiden Scheiben 18a in zwei Punkten an dem Deckelrand anliegt, kann dieses als eine Führungsstelle bezeichnet werden, denn der gegenüberliegende Deckelrand hat keine Führung mehr, sondern liegt im Bogenbereich nach oben hin frei – es sind also an dem Umfang des Deckels 10 drei Führungsstellen vorhanden.

Nachdem der Deckel 10 den bogenförmigen Übergabebereich durchlaufen hat und dabei um 180° gewendet worden ist, läuft er wieder in die senkrechte Abwärtsförderstrecke 13 ein und wird dort unter Vierpunktführung nach unten bis zur Austrageeinrichtung 17 transportiert, durch die dann die Deckel 10 einzeln aus den Taschen 14 herausgezogen und rechtwinklig zur Förderstrecke 13 seitlich abtransportiert werden. Das Herausführen der Deckel 10 kann dabei durch Auflegen der Deckel 10 auf das Austrageband 17 erfolgen oder durch einen im Bereich des Auftragebandes 17 angeordneten Magneten od. dgl. oder ein zusätzliches Ausstossen vorgenommen werden, so dass die Deckel 10 bei Auflage auf dem endlos umlaufenden Austrageband 17 aus den Taschen 14 störungsfrei herausgezogen und abtransportiert werden.

Während der aufwärtsgehenden, der sich anschliessenden bogenförmigen und der sich daran anschliessenden abwärtsgehenden Transportbewegung behalten die Deckel 10 ihre relativ ruhende Lage zu den angreifenden Fördermitteln bei und erfahren keine Verdrehung innerhalb der Deckelebene und auch keine Verschiebung oder Verkantung, was insbesondere auch im bogenförmigen Übergabebereich 18 durch die den Deckeln 10 eine Stützfläche gebende Drehführung 18 ausgeschlossen wird.

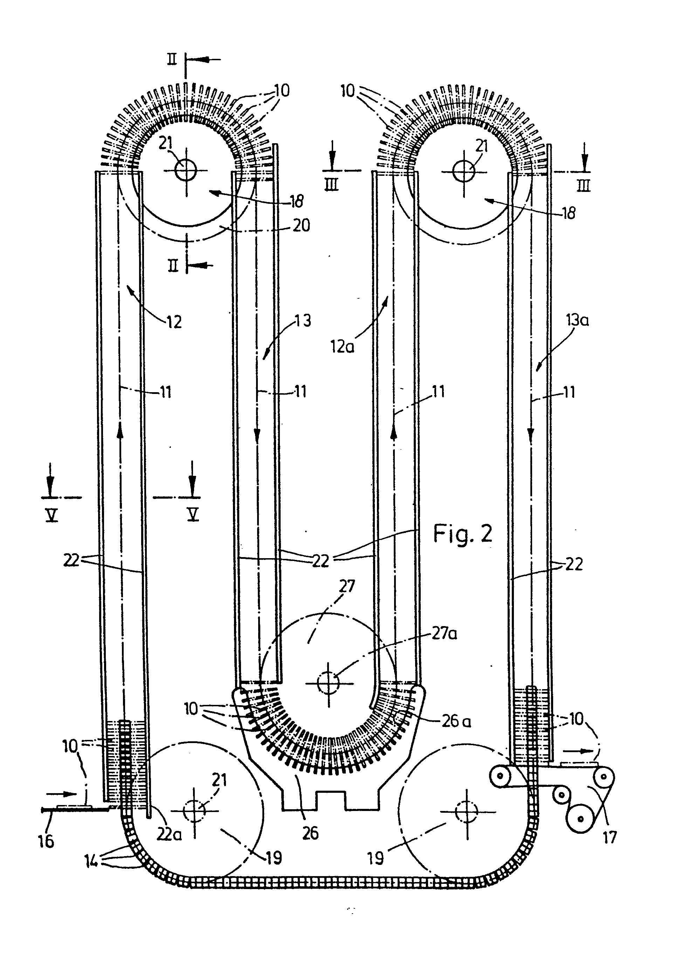

Die beiden in Fig. 2 und 3 dargestellten weiteren Ausführungen der Transporteinrichtung entsprechen im Grundaufbau und in der Wirkung der Vorrichtung nach Fig. 1, und deshalb sind für gleiche Teile auch dieselben Bezugszahlen verwendet worden. Die Weiterentwicklung liegt in der Ausbildung der Förderketten 11 zu mehreren auf- und abwärtsgehenden Förderstrecken 12, 13/12a, 13a bzw. 12, 13/12a, 13a/12b, 13b und der zusätzlichen Anordnung einer im unteren Umlenkbereich vorgesehenen Übergabeführung 26 bzw. mehrerer Übergabeführungen 26.

Bei der Transportvorrichtung nach Fig. 2 sind die beiden parallellaufenden Förderketten 11 mehrfach umgelenkt und bilden zwei aufwärts- und zwei abwärtsgehende Förderstrecken 12, 13/12a, 13a, indem sich an die abwärtsgehende Förderstrecke 13 wiederum eine aufwärtsgehende Förderstrecke 12a mit obenseitiger Drehführung 18 und daran eine abwärtsgehende Förderstrecke 13a anschliesst. Die Förderketten 11 sind im unteren Bereich um zwei Umlenkräder 19 umgelenkt, und zwischen diesen beiden Umlenkrädern 19 und im Abstand darüber liegt für jede Kette 11 ein Umlenkrad 27, welchem eine Gleitführung 26 für die Deckel 10 zugeordnet ist, die aus einer feststehenden oder aus zwei, entsprechend der Drehführungsscheiben 18a im Abstand zueinander angeordneten Gleitführungsplatten, gebildet ist und den Deckeln 10 eine Stützfläche 26a bietet. Jeder Förderstrecke 12, 13/12a, 13a sind wiederum zwei Führungsstangen 22 zugeordnet, die senkrecht bis zu den Drehführungen 18 und bis zur Gleitführung 26 verlaufen.

Die durch die Einrichtung 16 einzeln zugeführten Deckel 10 werden zuerst senkrecht in der Förderstrecke 12 nach oben hochtransportiert, dann durch die erste Drehführung 18 auf einem bogenförmigen Weg unter Wendung der Deckel um 180° zur abwärtsgehenden Förderstrecke 13 übergeben und bewegen sich dann senkrecht nach unten bis zur feststehenden Gleitführung 26, in deren Bereich sie wiederum einen bogenförmigen Weg bis zur zweiten senkrechten, aufwärtsgehenden Förderstrecke 12a durchlaufen. Hierbei werden die Deckel 10 ebenfalls wieder um 180° gewendet, so dass die in der ersten Förderstrecke 12 oben liegende Deckelseite ebenfalls wieder oben zu liegen kommt. Beim Durchlauf der Gleitführung 26 stützen sich die Deckel 10 mit derselben Randkante an der Gleitführung 26 ab, mit der sie sich auch an der ersten Drehführung abgestützt haben, so dass keine Deckelverlagerung erfolgt.

Nach Durchlauf der zweiten aufwärtsgehenden Förderstrecke 12a erfolgt die bogenförmige Übergabe durch die zweite Drehführung 18 unter 180°-Deckelwendung zur zweiten abwärtsgehenden Förderstrecke 13b und nach Durchlauf derselben die einzelne Deckelabförderung durch die Austrageeinrichtung 17.

Die weitere Ausführung der Transportvorrichtung nach Fig. 3 zeigt ein mehrfach umgelenktes Förderkettenpaar 11, wodurch jeweils drei aufwärtsgehende und drei abwärtsgehende Förderstrecken 12, 13/12a, 13a/12b, 13b gebildet sind. Hierbei sind drei obere Umlenkräder 20 und vier untere Umlenkräder 27/28 vorhanden, von denen die Umlenkräder 28 lediglich zur Kettenumlenkung dienen und den im Abstand dazwischen und darüber angeordneten Umlenkrädern 27 jeweils eine feststehende, bogenförmige Gleitführung 26 zugeordnet ist, die sich entsprechend dem Deckelbewegungsbereich bogenförmig (kreisbogenförmig) um die Räderdrehwelle 27a erstrecken.

Durch diese mehrfach umgelenkten Förderketten 11 gemäss Fig. 2 und 3 kann der Durchlaufweg der Deckel 10 vergrössert werden, ohne dass dabei die Höhe des Ofens grösser werden muss, sondern sie kann kleiner und somit höhenmässig kompakter ausgeführt werden.

Es liegt im Rahmen der Erfindung, anstelle der feststehenden Gleitführungen 26 auch Transportbandführungen vorzusehen, die von bogenförmig verlaufenden und endlos umlaufenden, angetriebenen Transportbändern oder -ketten gebildet sind und synchron zu der Deckelbewegung umlaufen.

Weiterhin liegt es im Rahmen der Erfindung, drei Ketten 11 parallel nebeneinander anzuordnen, von denen die mittlere Kette 11 beidseitig Aufnahmetaschen 14 trägt, so dass bei einem Umlauf gleichzeitig zwei Deckelreihen nebeneinander auf- und abtransportiert werden können.

Ausserdem kann die Emballagedeckel-Transportvorrichtung erfindungsgemäss als endlos umlaufende Mehrfachkette mit mehr als zwei oder drei nebeneinander parallel verlaufenden Ketten 11 ausgeführt sein.

Das in Fig. 12 dargestellte weitere Ausführungsbeispiel der Förderketten 11 mit Aufnahmetaschen 14 zeigt eine V-förmige Anordnung der Aufnahmetaschen 14 zueinander. Diesen Aufnahmetaschen 14 ist in den senkrechten Förderstrecken eine Führung 22 zugeordnet und die beiden Taschen 14 liegen mit der Führung 22 auf den Eckpunkten eines Dreieckes.

Durch diese V-förmige Taschenanordnng und die Führung 22 erfolgt in den senkrechten Förderstrecken eine Dreipunktanlage der Deckel 10, und in den Umlenkbereichen liegen die Deckel 10 lediglich in den Aufnahmetaschen 14, welche hierbei prismaförmige Aufnahmen ergeben, so dass dadurch die Dreh- bzw. Gleitführungen 18, 26 entfallen können. Diese Ausführung stellt eine Vereinfachung dar und ermöglicht ausserdem ohne Verstellungen der Ketten 11 den Transport unterschiedlich grosser Verschlüsse oder Deckel 10.

Bei einer weiteren ausgebauten Ausführung der Transportvorrichtung mit Trockenofen ist die letzte abwärtsgehende Förderstrecke 13, 13a, 13b im Anschluss an die Trockenzone nach unten hin in eine Kühlzone hineingeführt, von der aus diese Förderstrecke ggf. über eine weitere Umlenkung zur Austrageseite geführt ist. Für die Kühlzone entstehen bezüglich des Deckeltransportes dieselben Vorteile wie in der Trockenzone. Eine gesonderte Übergabe der Deckel ist nicht erforderlich. Die Heizung und Kühlung benötigen keine zusätzliche Isolationsmassnahme zwischen den Zonen, da die Heissluft in dem Trockenraum sich oben hält und die Kühlluft in dem unteren Bereich verbleibt.

**Patentansprüche**

1. Transportvorrichtung für Massenartikel (10), wie Emballagendeckel oder Verschlüsse, welche in einem Trockenofen angeordnet ist und welche die mit Beschichtungen, wie Dichtmassen, versehenen Massenartikel (10) unter Wärmeeinwirkung zum Trocknen und/oder Gelieren der Beschichtungen auf vertikalen Förderstrecken (12, 13) auf- und abtransportiert, mit zwei im parallelen Abstand nebeneinander angeordneten, über Umlenkräder (19, 20) endlos umlaufenden Förderketten (11), an deren einander zugewendeten Kettenseiten eine Vielzahl an Aufnahmetaschen (14) befestigt sind, die zur Aufnahme je eines Randbereiches der Massenartikel (10) zwischen den beiden Förderketten (11) dienen, mit auf jeder Förderstrecke (12, 13) zwei zwischen den Förderketten (11) angeordneten, über die gesamte Höhe der Förderstrecken (12, 13) verlaufenden, senkrechten Führungen (22) für die mit ihrem quer zu den Aufnahmetaschen (14) liegenden Umfangsrand daran geführt anliegenden Massenartikel (10), mit einer im unteren Umlenkbereich der Förderketten (11) angeordneten Zuführeinrichtung (16) für das Einbringen der Massenartikel (10) in die aufwärtsgehenden Aufnahmetaschen (14) sowie mit einer Austrageeinrichtung (17) für das Herausbewegen der Massenartikel (10) aus den abwärtsgehenden Aufnahmetaschen (14) und mit einer im oberen Umlenkbereich der Förderketten (11) vorgesehenen Übergabeführung, mit der die Massenartikel (10) von einer aufwärtsgehenden Förderstrecke (12) in eine abwärtsgehende Förderstrecke (13) übergeführt werden, dadurch gekennzeichnet, dass die Übergabeführung von einer sich um die Welle (21) der oberen Umlenkräder (20) kreisbogenförmig erstreckenden Stützfläche (18) gebildet ist, auf der sich die auf einem kreisbogenförmigen Umlauf von einer aufwärtsgehenden Förderstrecke (12) zu einer abwärtsgehenden Förderstrecke (13) unter 180°-Wendung unterbrechungsfrei bewegenden Massenartikel (10) mit ihrem quer zu den Aufnahmetaschen (14) liegenden Umfangsrand geführt abstützen.

2. Transportvorrichtung nach Anspruch 1, dadurch gekennzeichnet, dass die Stützfläche (18) von mindestens einer, vorzugsweise von zwei im Abstand nebeneinander um die Welle (21) angeordneten und mit dieser verdrehbaren, kreisrunden Stützscheiben (18a) gebildet ist, die eine Dreh- und Wendeführung für die Massenartikel (10) ergeben.

3. Transportvorrichtung nach Anspruch 2, dadurch gekennzeichnet, dass die Umlenkräder (19, 20) mit den obenseitigen Stützscheiben (18a) in Wellen-Längsrichtung im Abstand zueinander auf unterschiedlich grosse Massenartikel (10) einstellbar gelagert sind.

4. Transportvorrichtung nach Anspruch 1, dadurch gekennzeichnet, dass als Stützfläche (18) für die Massenartikel (10) eine Gleit- oder Transportbandführung (26) vorgesehen ist.

5. Transportvorrichtung nach einem der Ansprüche 1 bis 4, dadurch gekennzeichnet, dass die beiden Förderketten (11) mehrfach über obere und untere Umlenkräder (20; 27, 28) umgelenkt sind und dabei parallellaufende aufwärtsgehende Förderstrecken (12, 12a, 12b) und parallellaufende abwärtsgehende Förderstrecken (13, 13a, 13b) bilden, wobei an jedem oberen Umlenkrad (20) zur Bildung der Stützfläche (18) eine scheibenförmige, um die Welle (21) drehbare Drehführung angeordnet ist und an jedem unteren Umlenkbereich den unteren Umlenkrädern (27, 28) eine bogenförmige Gleit- oder Transportbandführung (26) für den quer zu den Aufnahmetaschen (14) liegenden Umfangsrand der Massenartikel (10) zugeordnet ist.

6. Transportvorrichtung nach Anspruch 5, dadurch gekennzeichnet, dass die untere Transportbandführung (26) von zwei in Umlenkräder-Wellenlängsrichtung im Abstand zueinander angeordneten Gleitplatten gebildet ist, die eine sich kreisbogenförmig mit Abstand um die Umlenkräderwelle (27a) erstreckende Stützfläche (26a) bilden.

7. Transportvorrichtung nach einem der Ansprüche 1 bis 6, dadurch gekennzeichnet, dass jede Aufnahmetasche (14) an der einen Seite einer parallel zur Kettenebene verlaufenden Platte (23) mehrere im Abstand übereinander angeordnete und zwischen sich sowie mit benachbarten Aufnahmetaschen (14) Aufnahmenuten (15) bildende Auflagerstege (24) besitzt und an der gegenüberliegenden Plattenseite zwei im Abstand übereinander angeordnete, durch Förderkettenhohlbolzen (11a) gesteckte bolzenförmige Rastverbinder (25) mit freiendseitigen Rastnasen (25a) aufweist.

8. Transportvorrichtung nach einem der Ansprüche 1 bis 7, dadurch gekennzeichnet, dass jeweils mehrere Förderketten (11) mit Aufnahmetaschen (14) im Abstand nebeneinander angeordnet sind und dabei die zwischen den beiden äusseren Ketten (11) liegenden Ketten (11) beidseitig mit Aufnahmetaschen (14) ausgestattet sind.

## Claims

1. Conveyor device for bulk articles (10), such as container lids or covers, which is located in a drying stove and which conveys the bulk articles (10) provided with coatings, such sealing compounds, upwards and downwards along vertical conveyor sections (12, 13) with the application of heat to dry and/or gel the coatings, with two conveyor chains (11) positioned parallel side by side at a distance from one another, travelling endlessly over deflection wheels (19, 20), on whose adjacent chain sides are attached a number of receiving compartments (14), each of which is used for reception of an edge section of the bulk articles (10) between the two conveyor chains (11), with on each conveyor section (12, 13) two vertical guides (22) located between the conveyor chains (11), running along the entire height of the conveyor sections (12, 13), for the bulk articles (10) resting guided on them with their peripheral edge located at right angles to the receiving compartments (14), with a feed device (16) positioned in the bottom deflection section of the conveyor chains (11) for feeding the bulk articles (10) into the ascending receiving compartments (14), as well as with a discharge device (17) for moving the bulk articles (10) out of the descending receiving compartments (14), and with a transfer guide provided in the top deflection section of the conveyor chains (11), with which the bulk articles (10) are transferred from an ascending conveyor section (12) into a descending conveyor section (13), characterized by the fact that the transfer guide is formed by a support face (18) extending in a circular arc around the spindle (21) of the top deflection wheels (20), on which the bulk articles (10) moving continuously while turning through 180° along a circular arc-shaped path from an ascending conveyor section (12) to a descending conveyor section (13) rest, guided with their peripheral edge locating at right angles to the receiving compartments (14).

2. Conveyor device in accordance with claim 1, characterized by the fact that the support face (18) is formed by at least one, preferably by two circular supports discs (18a) positioned side by side at a distance from one another about spindle (21), rotatable with the latter, which provide a turning and rotary guidance for the bulk articles (10).

3. Conveyor device in accordance with claim 2, characterized by the fact that the deflection wheels (19, 20) with the top-mounted support discs (18a) are mounted so as to be adjustable in spindle longitudinal direction at a distance from one another for bulk articles (10) of different sizes.

4. Conveyor device in accordance with claim 1, characterized by the fact that a sliding or conveyor belt guide (26) is provided as support face (18) for the bulk articles (10).

5. Conveyor device in accordance with one of claims 1 to 4, characterized by the fact that the two conveyor chains (11) are deflected several times by means of top and bottom deflection wheels (20, 27, 28) and thus form parallel ascending conveyor sections (12, 12a, 12b) and parallel descending conveyor sections (13, 13a, 13b), whereby on each top deflection wheel (20), to form the support face (18), a disc-shaped rotary guide rotatable about the spindle (21) is fitted and at each bottom deflection section the bottom deflection wheels (27, 28) are provided with an arc-shaped sliding or conveyor belt guide (26) for the peripheral edge of the bulk articles (10) located at right angles to the receiving compartments (14).

6. Conveyor device in accordance with claim 5, characterized by the fact that the bottom conveyor belt guide (26) is formed by two shoes mounted at a distance from one another in deflection wheel spindle longitudinal direction, which in turn form a support face (26a) extending in a circular arc at a distance from and around the deflection wheel spindle (27a).

7. Conveyor device in accordance with one of claims 1 to 6, characterized by the fact that each receiving compartment (14) has on one side of a plate (23) running parallel to the chain plane a number of support ridges (24) positioned at intervals above one another, forming receiving grooves (15) between one another as well as with adjacent receiving compartments (14), and on the opposite plate side has two vertically spaced pin shaped locating connectors (25) with locating lugs (25a) on their free ends pushed through hollow conveyor chains pins (11a).

8. Conveyor device in accordance with one of claims 1 to 7, characterized by the fact that in each case several conveyor chains (11) with receiving compartments (14) are mounted at intervals beside one another and the chains (11) located between the two outer chains (11) are fitted with receiving compartments (14) on both sides.

## Revendications

1. Dispositif de transport pour articles de masse (10), tels que couvercles d'emballage ou fermetures, qui est disposé dans un four de séchage et qui amène et évacue sur des lignes verticales de manutention (12, 13) les articles de masse (10) pourvus de couches d'enduction, telles que des pâtes d'étanchéité, sous l'effet de la chaleur, aux fins de séchage et/ou de gélification des couches d'enduction, avec deux chaînes d'acheminement tournant sans fin par l'intermédiaire de galets de renvoi (19, 20), parallèles et disposées l'une près de l'autre, dont les côtés comportant les chaînes et tournés l'un vers l'autre comprennent un grand nombre de poches (14), qui servent à reprendre resp. une zone marginale des articles de masse (10) entre les deux chaînes d'acheminement (11), avec sur chaque ligne d'acheminement (12, 13) deux guidages (22) verticaux placés entre les chaînes d'acheminement (11), se déplaçant sur toute la hauteur des lignes d'acheminement (12, 13), pour diriger les articles de masse (10) guidés avec leur bord périphérique oblique par rapport aux poches de reprise (14), avec un dispositif d'alimentation (16) disposé dans la zone de renvoi inférieure des chaînes d'acheminement (11) et servant à amener les articles de masse (10) dans les poches montantes (14) ainsi qu'avec un dispositif d'extraction (17) sortant les articles de masse des poches descendantes (14) et avec un guidage de transfert prévu dans la zone supérieure de renvoi des chaînes d'acheminement (11), avec lequel les articles de masse (10) sont transférés d'une ligne d'acheminement (12) montante dans une ligne d'acheminement (13) descendante, caractérisé par le fait que le guidage de transfert est constitué par une surface d'appui (18) s'étendant tel un cercle autour de l'arbre (21) des galets supérieurs de renvoi (20), sur laquelle s'appuient avec leur bord périphérique oblique par rapport aux poches (14) les articles de masse (10) se déplaçant sans interruption et en virant à 180° sur une boucle en arc de cercle les faisant passer d'une ligne d'acheminement montante (12) à une ligne d'acheminement descendante (13).

2. Dispositif de transport selon spécification 1, caractérisé par le fait que la surface d'appui (18) est formée d'au moins une, de préférence deux rondelles d'appui circulaires écartées l'une de l'autre, disposées autour de l'arbre (21) et tournant avec celui-ci, lesquelles assurent un guidage rotatif et l'inversion des articles de masse (10).

3. Dispositif de transport selon spécification 2, caractérisé par le fait que les galets de renvoi (19, 20) sont réglables en fonction d'articles de masse (10) de tailles différentes, avec les rondelles d'appui (18a) ci-dessus, dans le sens longitudinal de l'arbre, en étant écartés les uns des autres.

4. Dispositif de transport selon spécification 1, caractérisé par le fait qu'un guidage coulissant ou à bande de transport (26) est prévu comme surface d'appui (18) pour les articles de masse (10).

5. Dispositif de transport selon les spécifications 1 à 4, caractérisé par le fait que les deux chaînes d'acheminement (11) sont renvoyées plusieurs fois par l'intermédiaire de galets supérieurs et inférieurs (20; 27, 28) et forment ainsi des lignes d'acheminement (12, 12a, 12b) montantes et parallèles et des lignes d'acheminement (13, 13a, 13b) descendantes et parallèles, un guidage rotatif en forme de disque tournant autour de l'arbre (21) étant disposé sur chaque galet supérieur de renvoi (20) pour former la surface d'appui (18) et à chaque zone de renvoi inférieure un guidage coulissant ou de bande de transport (26) en forme d'arc étant affecté aux galets inférieurs de renvoi (27, 28) pour le bord périphérique des articles de masse (10), disposé obliquement par rapport aux poches (14).

6. Dispositif de transport selon spécification 5, caractérisé par le fait que le guidage inférieur de bande de transport (26) est formé de deux plaques de glissement écartées l'une de l'autre et disposées dans le sens longitudinal de l'arbre des galets de renvoi, lesquelles forment une surface d'appui (26a) s'étendant en forme d'arc de cercle à une certaine distance de l'arbre (27a) des galets de renvoi.

7. Dispositif de transport selon l'une des spécifications 1 à 6, caractérisé par le fait que chaque poche (14) possède sur l'une des côtés une plaque (23) parallèle au niveau de la chaîne plusieurs barrettes d'appui (24) formant entre elles et avec des poches de reprise voisines (14) des gorges de reprise (15), superposées et écartées l'une par rapport à l'autre, et comporte sur le côté opposé de la plaque deux connecteurs encliquetables (25) en forme de boulon, avec des tenons encliquetables (25a) du côté de l'extrémité dégagée, disposés l'un au-dessus de l'autre, fixés par boulon creux (11a) pour chaîne d'acheminement.

8. Dispositif de transport selon l'une des spécifications 1 à 7, caractérisé par le fait que plusieurs chaînes d'acheminement dotées de poches de reprise (14) sont disposées l'une près de l'autre, à une certaine distance, et que les chaînes (11) placées entre les deux chaînes extérieures (11) comportent des poches de reprise (14) des deux côtés.

0100427

Fig.1

Fig. 12

9

Fig. 2

Fig.4

Fig.5

V-V

Fig.6

Fig.7

Fig.8

Fig.9

Fig. 3

Fig. 10
II–II

Fig. 11
III–III